# DEMANDE DE BREVET EUROPEEN

(11) **EP 1 672 855 A1**
(43) Date de publication de la demande: **21.06.2006**
(21) Numéro de dépôt: 05110891.8
(22) Date de dépôt: 17.11.2005
(51) Int. Cl.: H04L 12/58

(54) **Procédé de limitation du nombre de conversations simultanées dans une messagerie instantanée**

(30) Priorité: 15.12.2004 FR 0413316
(71) Demandeur: FRANCE TELECOM, 75015 Paris (FR)
(72) Inventeur: Briand, Olivier, 14000 Caen (FR); Auvray, Vincent, 14000 Caen (FR); Dauguet, Anthony, 14260 Saint Pierre du Fresne (FR)
(74) Mandataire: Desormiere, Pierre-Louis

(57) **Abrégé**

L'invention concerne un procédé de limitation du nombre de conversations simultanées dans un service de messagerie instantanée comprenant une pluralité de clients de messagerie instantanée (C_1, C_2, C_3, C_4, C_S) en liaison avec un serveur de messagerie instantanée (200). Chaque client de messagerie instantanée (C_1 ; C_2 ; C_3 ; C_4 ; C_5) a un état de présence visible par les autres clients de messagerie instantanée de sa liste de contacts (222 ; 223 ; 224 ; 225 ; 221) qui varie au moins entre un état disponible et un état occupé. Conformément à l'invention, lorsque le nombre de conversations simultanées pour un client de messagerie instantanée (C_S) atteint un nombre prédéterminé (N), ce client de messagerie instantanée présente un état occupé pour tous les clients de messagerie instantanée (C_4) de sa liste de contacts autres que ceux (C_1, C_2, C_3) déjà en conversation avec ce dernier.

## Description

### Domaine de l'invention

La présente invention concerne le domaine des messageries instantanées. Elle concerne plus particulièrement la limitation du nombre de conversations simultanées dans de telles messageries.

### Art antérieur

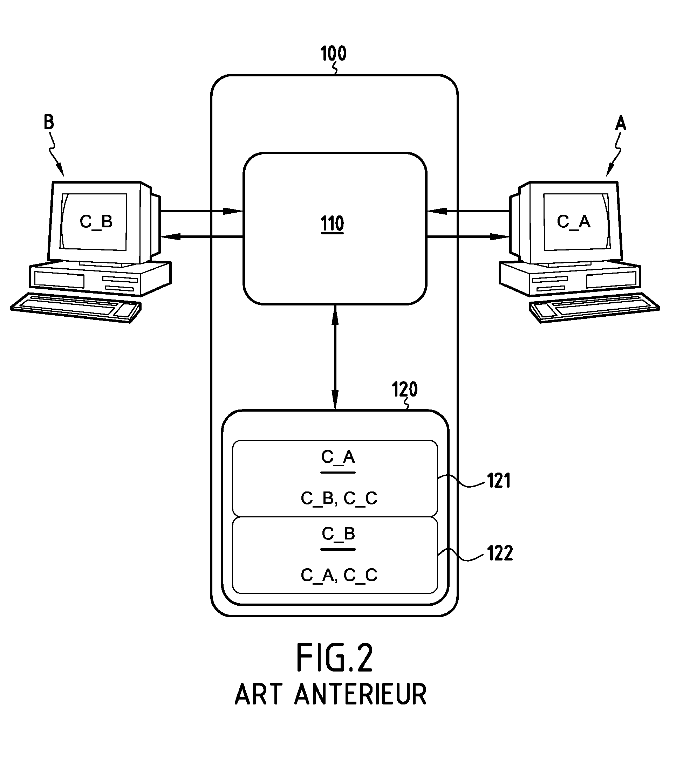

La messagerie instantanée permet à des utilisateurs d'échanger des messages en temps réel. La figure 2 illustre un exemple simplifié d'un système de messagerie instantanée standard qui comprend un serveur de messagerie instantanée 100 auquel sont connectés deux utilisateurs A et B par leur client respectif de messagerie instantanée C_A et C_B. Le serveur 100 comprend un module principal de messagerie instantanée 110 pour la gestion de la présence et l'échange de messages entre clients de messagerie instantanée en fonction de règles de routage des messages instantanés. Ce module gère également l'ensemble des listes de contacts 120 (également appelées "buddy lists") de chaque client de la messagerie instantanée telles que les listes 121 et 122 correspondant respectivement aux listes de contacts de A et B.

L'état de présence/disponibilité d'un utilisateur est un paramètre dynamique visible pour les autres usagers. Cet état peut varier en général entre un état "présent" et "absent" ou un état "disponible" et "occupé". Ces états de présence définissent pour l'ensemble de la liste de contacts de l'utilisateur la capacité à dialoguer de ce dernier. C'est l'utilisateur lui-même qui décide de son état de présence.

Sur la figure 2, lorsque l'utilisateur B cherche à dialoguer avec l'utilisateur A à travers des messages instantanés, B consulte d'abord l'état de présence de A indiqué dans sa liste de contact 122. Si ce dernier a paramétré son état de présence sur "disponible" par exemple, l'utilisateur B sait qu'il peut lui envoyer un message immédiatement et entamer un dialogue avec lui. Si, au contraire, l'état de présence de A indiqué dans la liste de contact de B correspond à "absent" ou "occupé", B sait que A est momentanément indisponible et qu'il ne lui répondra pas dans l'immédiat.

Actuellement, un utilisateur de messagerie instantanée peut être totalement ou partiellement "occupé". Dans le dernier cas, l'utilisateur peut être par exemple "occupé" pour 90 % de sa liste de contacts et "disponible" pour les 10 % restants. Cela correspond à la notion de gestion de disponibilité différenciée qui permet à l'utilisateur de choisir pour une période donnée le ou les contacts de sa liste avec lesquels il souhaite dialoguer.

Cependant, l'utilisateur ne peut pas limiter le nombre des conversations simultanées, c'est-à-dire le nombre de sollicitations émanant de sa liste de contact. Cette absence de moyen de limitation des conversations simultanées représente un inconvénient important en raison de l'usage grandissant des messageries instantanées notamment dans les entreprises où le nombre de sollicitations simultanées peut être rapidement élevé. En effet, sans un tel contrôle et à partir d'un certain nombre de conversations simultanées, par exemple trois, il sera difficile pour l'utilisateur de répondre à tout le monde dans des délais rapides, ce qui est pourtant le principe même de la messagerie instantanée.

### Objet et description succincte de l'invention

La présente invention vise à remédier aux inconvénients précités et à proposer une solution technique qui permet à un utilisateur de messagerie instantanée de décider du nombre maximum de conversations simultanées auxquelles il souhaite participer.

Ces buts sont atteints grâce à un procédé de limitation du nombre de conversations simultanées dans un service de messagerie instantanée comprenant une pluralité de clients de messagerie instantanée en liaison avec un serveur de messagerie instantanée, chaque client de messagerie instantanée ayant un état de présence visible par les autres clients de messagerie instantanée de sa liste de contacts, ledit état variant au moins entre un état disponible et un état occupé, caractérisé en ce que, lorsque le nombre de conversations simultanées pour un client de messagerie instantanée atteint un nombre prédéterminé, le client de messagerie instantanée présente un état occupé pour tous les clients de messagerie instantanée de sa liste de contacts autres que ceux déjà en conversation avec ce dernier.

Ainsi, le procédé de la présente invention permet à un utilisateur de messagerie instantanée de déterminer le nombre maximum de conversations simultanées auxquelles il souhaite participer. La gestion de présence de l'utilisateur est, par conséquent, réalisée automatiquement en fonction du nombre de conversations simultanées en cours.

L'utlisateur décide du nombre de conversations simultanées à ne pas dépasser en configurant le nombre prédéterminé de conversations simultanées à partir de son client de messagerie instantanée, ce nombre étant ensuite envoyé au serveur de messagerie instantanée et stocké dans une base d'information. Il peut ainsi fixer et mettre à jour librement le nombre de conversations simultanées auxquelles il souhaite participer. En outre, le nombre prédéterminé de conversations simultanées propre à chaque client de messagerie instantanée est communiqué au client de messagerie instantanée correspondant lors de chaque démarrage de celui-ci. De cette façon, le client de messagerie instantanée est informé à chaque nouvelle session du nombre de conversations simultanées qu'il peut autoriser. L'utilisateur n'a pas besoin de configurer ce nombre à chaque utilisation de son client de messagerie instantanée.

Les messages envoyés par les clients de messagerie instantanée à destination d'un client de messagerie ayant atteint son nombre maximum de conversations simultanées sont stockés sur le serveur de messagerie instantanée. Cela permet de garder ces messages jusqu'à que le client de messagerie instantanée redevienne disponible pour ces clients de messagerie instantanée et d'assurer quand même un suivi des messages dans la messagerie instantanée.

La présente invention a également pour objet un serveur de messagerie instantanée comprenant un module principal de messagerie instantanée pour gérer l'échange des messages instantanés entre des clients de messagerie instantanée, ledit module principal étant en liaison avec un module de listes de contacts contenant des listes de contacts des clients de messagerie instantanée, caractérisé en ce qu'il comprend en outre un module de gestion du nombre de conversations simultanées pour, lorsque le nombre de conversations simultanées pour un client de messagerie instantanée atteint un nombre prédéterminée changer l'état de présence dudit client de messagerie instantanée en un état occupé pour tous les clients de messagerie instantanée de sa liste de contacts autres que ceux déjà en conversation avec ce dernier.

La solution technique proposée par l'invention pour réaliser une limitation du nombre de conversations simultanées pour un client de messagerie instantanée dans un serveur de messagerie instantanée ne nécessite aucune modification du module principal de messagerie. Cette solution peut être, par conséquent, facilement intégrée dans des serveurs de messagerie instantanée déjà en place.

Pour éviter à l'utilisateur d'avoir à configurer à chaque utilisation son client de messagerie, le serveur de messagerie instantanée comprend en outre une base d'information du nombre limite de conversations simultanées qui stocke le nombre prédéterminé de conversations simultanées configuré pour chaque client de messagerie instantanée. A chaque démarrage (ouverture de session) d'un client de messagerie, le serveur de messagerie instantanée communique au client le nombre prédéterminé de conversations simultanées qui a été stocké pour ce client.

Le serveur comprend également des moyens pour stocker les messages instantanés envoyés par les clients de messagerie instantanée pour lesquels le client de messagerie instantanée destinataire de ces messages présente un état occupé. Ces messages peuvent ainsi être conservés au niveau du serveur jusqu'au changement d'état de présence du client de messagerie instantanée destinataire.

L'invention a encore pour objet un système de messagerie instantanée comprenant une pluralité de clients de messagerie instantanée en liaison avec au moins un serveur de messagerie instantanée tel que décrit précédemment.

Afin de permettre à l'utilisateur de fixer le nombre maximum de conversations simultanées auxquelles il souhaite participer, les clients de messagerie instantanée comprennent des moyens d'interface pour configurer un nombre prédéterminé de conversations simultanées et pour envoyer à un serveur de messagerie instantanée un message signifiant son état saturé lorsque le nombre de conversations simultanées atteint le nombre prédéterminé.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique globale d'un mode de réalisation du système de messagerie instantanée selon l'invention,
- la figure 2 est une vue schématique d'un système de messagerie instantanée selon l'art antérieur.

### Description détaillée des modes de réalisation de l'invention

La présente invention s'applique aux systèmes de messagerie instantanée. L'invention propose d'intégrer des fonctionnalités essentiellement sous forme logicielle dans les serveurs de messagerie instantanée habituellement utilisés pour réaliser des échanges de messages instantanés entre des utilisateurs. Les fonctionnalités proposées sont compatibles avec les normes et protocoles actuellement utilisés par les services de messageries instantanées, ce qui permet d'intégrer ces nouvelles fonctionnalités aussi bien dans des nouveaux serveurs que dans des serveurs de messagerie instantanée déjà en place.

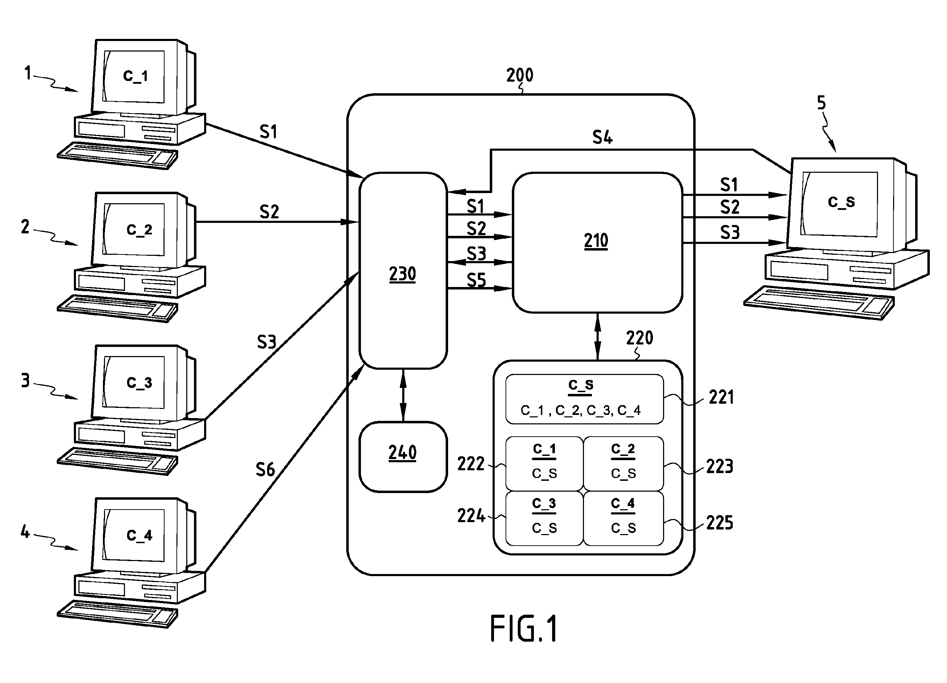

La figure 1 est un schéma fonctionnel général d'un système selon l'invention montrant les différentes parties intervenant dans le procédé de l'invention. Les parties qui interviennent principalement lors d'une opération de limitation du nombre des conversations simultanées sont un ou plusieurs utilisateurs sollicitant (ici quatre) qui possèdent chacun un terminal comprenant un client de messagerie instantanée (C_1, C_2, C_3, C_4), un utilisateur sollicité 5 qui possède un terminal équipé d'un client de messagerie instantanée C_S, ainsi qu'un serveur de messagerie instantanée 200. De façon connue, le client de messagerie instantanée (ou agent utilisateur) est un logiciel qui permet à un utilisateur d'accéder, par un identifiant propre, à un service de messagerie instantanée via un serveur. Le client de messagerie instantanée permet notamment de composer et de recevoir des messages. Il permet aussi à l'utilisateur d'accéder au serveur de messagerie instantanée pour gérer sa liste de contacts associée.

Par souci de simplification, le système de la figure 1 est représenté avec quatre clients de messagerie instantanée sollicitants et un client de messagerie instantanée sollicité. Toutefois, au vu de la description qui suit, l'homme du métier envisagera sans difficulté la mise en oeuvre d'un tel système à plus grande échelle, c'est-à-dire avec un nombre d'utilisateurs sollicitants et sollicités différent et en particulier plus important.

Dans l'exemple considéré dans la figure 1, les utilisateurs disposent, en tant que terminal d'envoi et de réception des messages, d'un terminal fixe, du type ordinateur personnel connecté à un réseau informatique. Cependant, la présente invention s'applique d'une manière générale à tous les terminaux qui comprennent des moyens d'envoi et de réception de messages instantanés via un réseau de communication (ex. téléphone mobile ou assistant numérique personnel).

Le réseau de communication (non représenté) à travers lequel les terminaux des utilisateurs sont connectés au serveur de messagerie instantanée peut être un réseau « ouvert » comme le réseau Internet, un réseau « fermé » tel qu'un réseau d'entreprise de type Intranet, ou encore un réseau partiellement ouvert utilisant à la fois un réseau fermé et un réseau ouvert.

Le serveur de messagerie instantanée 200 permet l'échange de messages instantanés entre deux utilisateurs ou plus qui sont vus par le serveur comme unique grâce à leur identifiant. Le serveur de messagerie instantanée 200 comprend un module principal de messagerie instantanée 210, un module de listes de contacts 220, un module de gestion du nombre de conversations simultanées 230 et une base d'information du nombre limite de conversations simultanées 240.

Le module principal de messagerie instantanée 210, qui est un élément logiciel d'un serveur de messagerie instantanée bien connu en soi, est destiné à réaliser la gestion de présence et l'échange de messages entre les clients de messagerie instantanée en fonction de règles de routage de messages instantanés (agent de transfert). Il gère également les listes de contacts.

Le module 220 est une base d'informations qui fait partie intégrante du serveur de messagerie instantanée et qui contient toutes les listes de contacts de chaque client de messagerie, dans l'exemple considéré ici les listes de contacts des clients C_S 221, C_1 222, C_2 223, C_3 224 et C_4 225.

Le module de gestion du nombre de conversations simultanées 230 est un élément propre à la présente invention. Il gère, côté serveur, l'accès au client de messagerie instantanée des utilisateurs ayant activé le service de limitation du nombre de conversations simultanées. Ce module s'interface avec le module principal de messagerie instantanée 210 pour connaître l'état saturé ou non (i.e. nombre maximum de conversations simultanées atteint ou non) d'un client de messagerie instantanée et modifie son état de présence en conséquence. Le module 230 s'interface en outre avec les clients de messagerie instantanée sollicités pour effectuer la gestion de présence différenciée dans le cas où un de ces clients aurait atteint son nombre maximum de conversations simultanées. Tous les messages en provenance d'un client de messagerie instantanée transitent d'abord par le module 230 qui les transmet ensuite au module principal 210.

Le module de gestion du nombre de conversations simultanées 230 peut être développé dans un langage tel que le C++ ou Java. Ainsi, il peut être intégré dans l'architecture d'un serveur de messagerie instantanée (ex. Jabber) et utilise dans ce cas le protocole standarisé "XMPP" ("eXtensible Messaging and Presence Protocol" ; Protocole de messagerie instantanée basé sur XML). Dans le cas où le module de gestion du nombre de conversations simultanées selon l'invention est intégré dans un serveur de messagerie instantanée déjà existant ou non, ce dernier doit utiliser un protocole compatible avec celui employé par le module principal de ce serveur de messagerie instantanée.

La base d'information du nombre limite de conversations simultanées 240 s'interface avec le module de gestion du nombre de conversations simultanées 230 pour stocker la valeur d'un paramètre N qui représente le nombre maximum de conversations simultanées pour chaque utilisateur du service de messagerie instantanée. Ce module est sollicité par le module 230 au démarrage d'un client de messagerie instantanée et à chaque fois que le module 230 a besoin de connaître le paramètre N.

Le module 230 interroge la base d'information 240 contenant les préférences du client de messagerie instantanée sollicité, ici C_S, et en extrait la valeur liée au service de limitation de conversations simultanées qu'il communique au client de messagerie instantanée lors de son démarrage. Si cette valeur est fixée par exemple à un maximum de trois conversations simultanées, le module 230 est inactif dans l'échange des messages et dans la gestion de présence différenciée tant que les conversations simultanées n'ont pas atteint le nombre de trois. Lorsque le nombre de trois conversations simultanées est atteint, le client de messagerie instantanée C_S envoie au module 230 un message lui signifiant son état "saturé", C_S étant alors en conversation avec trois clients de messagerie instantanée, par exemple C_1, C_2 et C_3. Le module 230 s'active alors pour l'utilisateur 5 du client de messagerie instantanée C_S. Le module 230 agit également vis-à-vis des clients de messagerie instantanée des autres utilisateurs du service de messagerie instantanée à l'exception de ceux des trois utilisateurs déjà en conversation avec l'utilisateur 5, soit ici les utilisateurs 1, 2 et 3 (clients de messagerie instantanée C_1, C_2 et C_3). Pour tous les autres utilisateurs de la messagerie instantanée, l'état de présence de l'utilisateur 5 devient "*Occupé*" ("*Busy*") et les nouveaux messages adressés au client de messagerie instantanée C_S de l'utilisateur 5 par les utilisateurs autres que les utilisateurs 1 à 3 sont gérés comme pour l'état "*Déconnecté*" ("*Offline*"), c'est-à-dire qu'ils sont stockés sur le serveur de messagerie instantanée 200 dans l'attente d'un changement de l'état de présence de l'utilisateur 5. Lorsqu'une des conversations entre le client de messagerie instantanée C_S et C1 ou C_2 ou C3 s'arrête, le client de messagerie instantanée C_S envoie un message au module 230 pour lui indiquer la fin de son état "saturé". L'état de présence du client de messagerie C_S passe de "*Occupé*" ("*Busy*") à "*Disponible*" ("*Available*") et les messages envoyés par les clients de messagerie autres que C_1 à C_3 qui ont été stockés sur le serveur lui sont transmis. Le module 230 devient inactif jusqu'à ce que le nombre de conversations simultanées soit de nouveau de trois.

La configuration du nombre maximum de conversations simultanées est réalisée par l'utilisateur directement sur le serveur de messagerie instantanée à partir de son client de messagerie instantanée. A cet effet, l'utilisateur, par exemple l'utilisateur 5 du client de messagerie instantanée C_S, réalise cette configuration en sélectionnant par exemple une option "limitation du nombre de conversations simultanées" disponible dans le menu de son client de messagerie instantanée. Cette sélection déclenche l'ouverture d'une fenêtre qui l'invite à indiquer une valeur pour le paramètre N correspondant au nombre maximum de conversations simultanées qu'il autorise, c'est-à-dire le nombre maximum de contacts de sa messagerie instantanée susceptibles de le solliciter simultanément. Une fois la valeur du paramètre N saisie, par exemple trois, le client de messagerie instantanée C_S envoie un message contenant la valeur du paramètre N au module de gestion du nombre de conversations simultanées 230. Le module 230 conserve cette valeur dans la base d'information du nombre limite de conversations simultanées 240. A chaque démarrage du client de messagerie instantanée C_S (i.e. à chaque nouvelle session), le module 230 interroge la base 240 et informe le client de messagerie instantanée C_S de la valeur du paramètre N.

On décrit maintenant un mode de mise en oeuvre du procédé selon l'invention dans le système de la figure 1 sur laquelle les différentes étapes intervenant lors d'une opération de limitation du nombre de conversations simultanées sont représentées par des flèches S1 à S6. Le procédé selon l'invention comprend bien entendu une étape préalable de configuration du nombre de discussions simultanées et une étape de chargement de ce nombre par le client de messagerie instantanée qui va être sollicité comme expliqué précédemment.

La mise en oeuvre qui va être décrite se déroule selon les hypothèses suivantes :
- les utilisateurs 1 à 4 respectivement des clients de messagerie instantanée sollicitants C_1 à C_4 font partie de la liste de contacts 221 de l'utilisateur 5 du client de messagerie instantanée sollicité C_S qui lui même fait partie des listes de contacts 222 à 225 respectivement des clients de messagerie instantanée C_1 à C_4,
- l'utilisateur 5 a configuré son client de messagerie instantanée C_S de façon à limiter à trois le nombre maximum de conversations simultanées,
- les clients de messagerie instantanée C_1 à C_3 sollicitent le client de messagerie instantanée C_S dans un laps de temps suffisamment court pour que ce dernier gère trois conversations simultanées lorsque la sollicitation du quatrième client de messagerie instantanée C_4 survient.

Dans une première étape S1, le client de messagerie instantanée C_1 souhaite dialoguer par messagerie instantanée avec le client de messagerie instantanée C_S. C'est la première conversation de C_S. Le nombre de conversations simultanées n'ayant pas atteint le nombre de trois, le serveur ne bloque pas le message instantané qui arrive au client de messagerie instantanée C_S et la conversation débute. Le client le client de messagerie instantanée C_2 souhaite aussi dialoguer par messagerie instantanée avec le client de messagerie instantanée C_S. C'est la deuxième conversation simultanée pour C_S. Le nombre de conversations simultanées n'a pas dépassé la limite de trois, le serveur ne bloque pas le message instantané de C_2 qui arrive au client de messagerie instantanée C_S et la conversation débute (étape S2).

Le troisième client de messagerie instantanée C_3 souhaite aussi dialoguer avec le client de messagerie instantanée C_S. C'est la troisième conversation simultanée pour C_S. Le nombre de conversations simultanées n'ayant pas dépassé le nombre maximum de trois, le serveur ne bloque pas le message instantané de C_3 qui arrive au client de messagerie instantanée C_S et la conversation débute (étape S3).

Cependant, une fois cette troisième conversation débutée, le client de messagerie instantanée C_S a atteint son maximum de conversations simultanées. Il envoie alors au module de gestion du nombre de conversations simultanées 230 un message lui signifiant son état "saturé" (étape S4). Le client de messagerie instantanée C_S est alors en conversation simultanée avec les trois clients de messagerie instantanée C_1 à C_3.

Le module 230 indique au module principal de messagerie instantanée 210 que le client de messagerie instantanée C_S devient "*Occupé*" ("*Busy*") pour tous les clients de messagerie instantanée de sa liste de contacts 221 à l'exception des trois clients de messagerie instantanée C_1 à C_3 déjà en conversation (étape S5). Les nouveaux messages adressés au client de messagerie instantanée C_S autres que ceux provenant de C_1 à C_3 sont gérés comme pour le statut "*Déconnecté*" ("*Offline*"). Si par exemple, le client de messagerie instantanée C_4 envoie un message à destination du client de messagerie instantanée C_S, ce message ne dépasse pas le module 230 qui le stocke sur le serveur de messagerie instantanée 200 dans l'attente d'un changement d'état de présence du client de messagerie C_S (étape S6). Le client de messagerie instantanée C_4 voit le client de messagerie instantanée C_S avec un statut "*Occupé*" ("*Busy*") alors que les clients de messagerie instantanée C_1 à C_3 le voit avec un statut "*Disponible*" ("*Available*"). Les conversations entre C_S et C_1 à C_3 se poursuivent.

Si une conversation entre un des clients de messagerie instantanée C_1 à C_3 et le client de messagerie instantanée C_S se termine, ce dernier envoie au module 230 un message lui signifiant que son état n'est plus "saturé". L'état de présence du client de messagerie instantané C_S passe de "*Occupé*" ("*Busy*") à "*Disponible*" ("*Available*") pour tous les membres de sa liste de contacts 221. Le module 230 devient inactif jusqu'à ce que les conversations simultanées atteignent de nouveau le nombre de trois.

De façon optionnelle, certains clients de messagerie instantanée peuvent être reconnus comme des clients prioritaires pour lesquels les règles de limitation du nombre de conversations simultanées ne s'appliquent pas. L'utilisateur peut par exemple paramétrer de tels clients dans sa liste de contacts de manière à être toujours disponible pour ces clients même si le nombre maximum de conversations simultanées est déjà atteint.

## Revendications

1. Procédé de limitation du nombre de conversations simultanées dans un service de messagerie instantanée comprenant une pluralité de clients de messagerie instantanée (C_1, C_2, C_3, C_4, C_S) en liaison avec un serveur de messagerie instantanée (200), chaque client de messagerie instantanée (C_1 ; C_2 ; C_3 ; C_4 ; C_S) ayant un état de présence visible par les autres clients de messagerie instantanée de sa liste de contacts (222 ; 223 ; 224 ; 225 ; 221), ledit état de présence variant au moins entre un état disponible et un état occupé, **caractérisé en ce que**, lorsque le nombre de conversations simultanées pour un client de messagerie instantanée (C_S) atteint un nombre prédéterminé (N), ledit client de messagerie instantanée présente un état occupé pour tous les clients de messagerie instantanée (C_4) de sa liste de contacts autres que ceux (C_1, C_2, C_3) déjà en conversation avec ce dernier.

2. Procédé selon la revendication 1, **caractérisé en ce qu'**un utilisateur configure le nombre prédéterminé (N) de conversations simultanées à partir de son client de messagerie instantanée, ledit nombre étant ensuite envoyé au serveur de messagerie instantanée (200) et stocké dans une base d'information du nombre limite de conversations simultanées (240).

3. Procédé selon la revendication 1, **caractérisé en ce que** le nombre prédéterminé (N) de conversations simultanées est communiqué au client de messagerie instantanée lors de chaque démarrage de celui-ci.

4. Procédé selon l'une quelconque des revendications 1 à 3, **caractérisé en ce que**, lorsque le nombre de conversations simultanées pour un client de messagerie instantanée atteint un nombre prédéterminé (N), les messages instantanés envoyés par les clients de messagerie instantanée de la liste de contacts dudit client de messagerie instantanée autres que ceux déjà en conversation avec ce dernier sont stockés sur le serveur de messagerie instantanée.

5. Serveur de messagerie instantanée (200) comprenant un module principal de messagerie instantanée (210) pour gérer l'échange des messages instantanés entre des clients de messagerie instantanée (C_1, C_2, C_3, C_4, C_S), ledit module principal étant en liaison avec un module de listes de contacts (220) contenant des listes de contacts (221, 222, 223, 224, 225) des clients de messagerie instantanée, chaque client de messagerie instantanée (C_1 ; C_2 ; C_3 ; C_4 ; C_S) ayant un état de présence visible par les autres clients de messagerie instantanée de sa liste de contacts (222 ; 223 ; 224 ; 225 ; 221), ledit état de présence variant au moins entre un état disponible et un état occupé, **caractérisé en ce qu'**il comprend en outre un module de gestion du nombre de conversations simultanées (230) pour, lorsque le nombre de conversations simultanées pour un client de messagerie instantanée (C_S) atteint un nombre prédéterminé (N), changer l'état de présence dudit client de messagerie instantanée en un état occupé pour tous les clients de messagerie instantanée (C_4) de sa liste de contacts autres que ceux (C_1, C_2, C_3) déjà en conversation avec ce dernier.

6. Serveur selon la revendication 5, **caractérisé en ce qu'**il comprend en outre une base d'information du nombre limite de conversations simultanées (240) pour stocker le nombre prédéterminé (N) de conversations simultanées configuré par chaque client de messagerie instantanée.

7. Serveur selon la revendication 6, **caractérisé en ce qu'**il comprend des moyens pour communiquer le nombre prédéterminé (N) de conversations simultanées correspondant à un client de messagerie instantanée lors de chaque démarrage de ce dernier.

8. Serveur selon l'une quelconque des revendications 5 à 7, **caractérisé en ce qu'**il comprend des moyens pour stocker les messages instantanés envoyés par les clients de messagerie instantanée pour lesquels ledit client de messagerie instantanée présente un état occupé.

9. Système de messagerie instantanée comprenant une pluralité de clients de messagerie instantanée (C_1, C_2, C_3, C_4, C_S) en liaison avec au moins un serveur de messagerie instantanée selon l'une quelconque des revendications 5 à 8.

10. Système selon la revendication 9, **caractérisé en ce que** les clients de messagerie instantanée (C_1, C_2, C_3, C_4, C_S) comprennent des moyens d'interface pour configurer un nombre prédéterminé (N) de conversations simultanées.

11. Client de messagerie instantanée, **caractérisé en ce qu'**il comprend des moyens d'interface pour configurer un nombre prédéterminé de conversations simultanées et pour envoyer à un serveur de messagerie instantanée un message signifiant son état saturé lorsque le nombre de conversations simultanées atteint le nombre prédéterminé.
